# EUROPEAN PATENT APPLICATION

(11) **EP 4 369 676 A1**
(43) Date of publication of application: **15.05.2024**
(21) Application number: 22837501.0
(22) Date of filing: 23.06.2022
(51) Int. Cl.: H04L 41/0654, H04L 12/28, H04L 43/08

(54) **SERVER, SYSTEM, AND METHOD**

(30) Priority: 09.07.2021 JP 2021114550
(71) Applicant: DAIKIN INDUSTRIES, LTD., Osaka-Shi, Osaka 530-0001 (JP)
(72) Inventor: OCHI, Yasutaka, Osaka-shi, Osaka 530-8323 (JP); TSUBOI, Kosuke, Osaka-shi, Osaka 530-8323 (JP)
(74) Representative: Hoffmann Eitle
(86) International application number: PCT/JP2022/025129
(87) International publication number: WO 2023/282084

(57) **Abstract**

Abnormality of a terminal is detected and resolved from a distance. A server includes a control unit, wherein the control unit is configured to communicate with the terminal that collects information from a device, and detect the abnormality of the terminal based on a state of transmission of data from the terminal; and transmit an instruction to restart to the terminal.

## Description

### Technical Field

The present disclosure relates to a server, a system, and a method.

### Background Art

Conventionally, it has been known how to deal with an abnormality that has occurred in a terminal such as a communication adapter installed in an air conditioner. In Patent Document 1, it is described that when a communication adapter detects a communication abnormality, the communication adapter restarts its own machine.

### Citation List

### Patent Document

[Patent document 1] Japanese Unexamined Patent Application Publication No. 2014-064203

### Summary of Invention

### Technical Problem

However, if a terminal such as a communication adapter cannot restart after detecting an abnormality by itself, a service person or the like must visit the site to resolve the abnormality of the terminal. The purpose of the present disclosure is to detect and resolve the abnormality of the terminal from a distance.

### Solution to Problem

A server according to a first aspect of the present disclosure includes
a control unit, wherein
the control unit is configured to
   communicate with a terminal that collects information from a device, and detect an abnormality of the terminal based on a state of transmission of data from the terminal; and
   transmit an instruction to restart to the terminal.

According to the first aspect of the present disclosure, an abnormality of the terminal can be detected and resolved from a distance.

Further, a second aspect of the present disclosure is the server according to the first aspect, wherein the control unit reports the abnormality of the terminal to a user terminal.

According to the second aspect of the present disclosure, the abnormality of the terminal can be reported to the user.

Further, a third aspect of the present disclosure is the server according to the second aspect, wherein the control unit transmits the instruction to restart to the terminal, in response to an instruction from the user terminal.

According to the third aspect of the present disclosure, the user can determine whether the terminal needs to be restarted.

Further, a fourth aspect of the present disclosure is the server according to the first aspect, wherein
the control unit
determines whether the terminal needs to be restarted, and
transmits the instruction to restart to the terminal, in response to determining that the terminal needs to be restarted.

According to the fourth aspect of the present disclosure, the server can determine whether the terminal needs to be restarted.

Further, a fifth aspect of the present disclosure is the server according to any one of the first to fourth aspects, wherein the state of the transmission of the data from the terminal is that no data is transmitted from the terminal to the server.

According to the fifth aspect of the present disclosure, it is possible to detect that no data has been transmitted from the terminal to the server.

Further, a sixth aspect of the present disclosure is the server according to any one of the first to fourth aspects, wherein the state of the transmission of the data from the terminal is that there is an abnormality in the data transmitted from the terminal to the server.

According to the sixth aspect of the present disclosure, it is possible to detect an abnormality in the data transmitted from the terminal to the server.

Further, a seventh aspect of the present disclosure is the server according to the sixth aspect, wherein the abnormality in the data includes at least one of partial data loss, total data loss, not being most recent data, and data inconsistency.

According to the seventh aspect of the present disclosure, the details of the abnormality in the data transmitted from the terminal to the server can be detected.

Further, an eighth aspect of the present disclosure is the server according to the second aspect, wherein the control unit reports the abnormality of the terminal to the user terminal, when the abnormality of the terminal is detected multiple times.

According to the eighth aspect of the present disclosure, a report is prevented from being sent to the user terminal when the terminal is not abnormal.

Further, a ninth aspect of the present disclosure is the server according to any one of the first to eighth aspects, wherein the control unit determines whether the terminal is normal after the terminal restarts.

According to the ninth aspect of the present disclosure, it is possible to confirm whether the abnormality of the terminal is resolved after the restart.

A system according to a tenth aspect of the present disclosure includes
a server; and
a terminal connected to the server and configured to collect information from a device, wherein
the server includes a control unit configured to
   detect an abnormality of the terminal based on a state of transmission of data from the terminal; and
   transmit an instruction to restart to the terminal.

A method according to an eleventh aspect of the present disclosure is executed by a control unit of a server, the method including
a step of detecting an abnormality of a terminal that collects information from a device, based on a state of transmission of data from the terminal; and
a step of transmitting an instruction to restart to the terminal.

### Brief Description of Drawings

[FIG. 1] FIG. 1 is a diagram illustrating an overall configuration according to an embodiment of the present disclosure.
[FIG. 2] FIG. 2 is a diagram illustrating a hardware configuration of a terminal (communication adapter) according to an embodiment of the present disclosure.
[FIG. 3] FIG. 3 is a diagram illustrating a hardware configuration of a server according to an embodiment of the present disclosure.
[FIG. 4] FIG. 4 is a sequence diagram of processing executed by an air conditioning system according to an embodiment of the present disclosure (when a user determines whether a restart is necessary).
[FIG. 5] FIG. 5 is a sequence diagram of processing executed by an air conditioning system according to an embodiment of the present disclosure (when a server determines whether a restart is necessary).

### Description of Embodiments

Embodiments of the present disclosure will be described below based on the drawings.

### <Explanation of terminology>

- In the present specification, a "communication adapter" is a terminal having a control function and a communication function. The communication adapter can acquire the operation data and the like of the air conditioner from a heat source side device (outdoor unit) of the air conditioner and transmit the operation data and the like of the air conditioner to a server. The communication adapter is an example of a terminal.

### <System configuration>

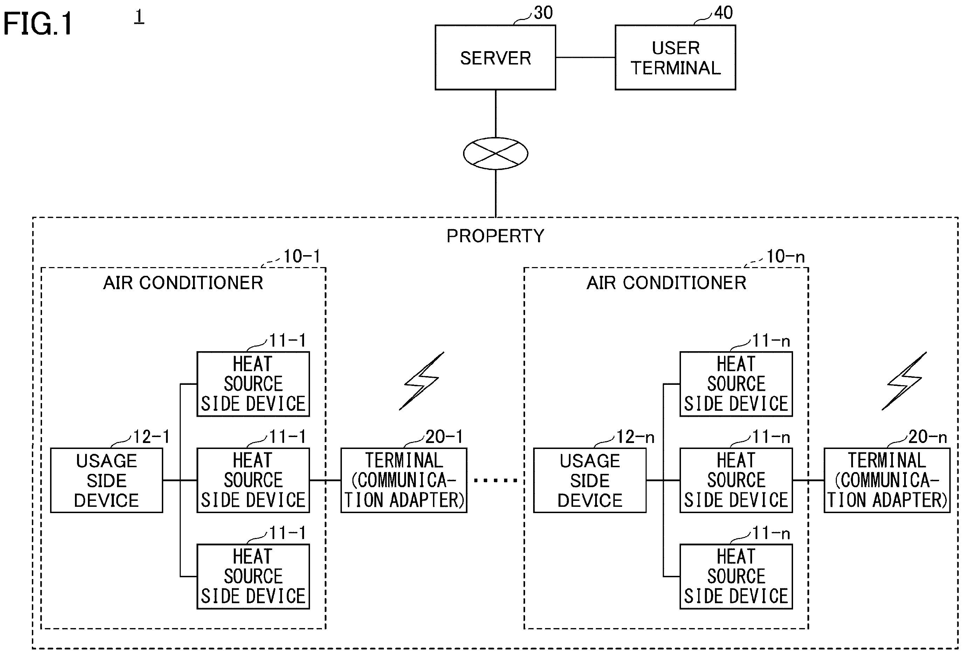

FIG. 1 is a diagram illustrating an overall configuration according to an embodiment of the present disclosure. It is assumed that an air conditioner 10-1, ... and an air conditioner 10n (n is an integer greater than or equal to 1) are installed in a property.

A property is a place where an air conditioner is installed. For example, a property is a building, a floor in a building, etc. One or more air conditioners are installed in one property.

As illustrated in FIG. 1, an air conditioning system 1 includes the air conditioner 10-1, ..., the air conditioner 10n (hereinafter, the air conditioner 10-1, ..., the air conditioner 10n are collectively referred to as the air conditioner 10), a terminal (communication adapter) 20-1, ..., a terminal (communication adapter) 20n (hereinafter, the terminal (communication adapter) 20-1, ..., the terminal (communication adapter) 20n are collectively referred to as the terminal (communication adapter) 20), a server 30, and a user terminal 40. Each of these elements will be described below.

### <<Air conditioner>>

The air conditioner 10 is any type of air conditioner. The air conditioner 10-1, ..., the air conditioner 10n include a heat source side device 11-1, ..., a heat source side device 11n (hereinafter, the heat source side device 11-1, ..., the heat source side device 11n are collectively referred to as the heat source side device 11), and a usage side device 12-1, ..., and a usage side device 12n (hereinafter, the usage side device 12-1, ..., and the usage side device 12n are collectively referred to as the usage side device 12), respectively. The air conditioner 10 has one or more heat source side devices 11 and one or more usage side devices 12. The heat source side device 11 is also referred to as an outdoor unit, and the usage side device 12 is also referred to as an indoor unit.

The terminal (communication adapter) 20-1, ..., and a terminal (communication adapter) 20n are connected to the heat source side device 11-1, ..., and the heat source side device 11n, respectively.

### «Terminal (communication adapter) »

The terminal (communication adapter) 20 is a terminal having a control function and a communication function (also referred to an edge of the Internet of Things (IoT)). The terminal (communication adapter) 20 restarts in response to an instruction from the server 30. The terminal (communication adapter) 20 collects information from a device such as the air conditioner 10.

The terminal (communication adapter) 20 can communicate with the server 30 via wireless communication such as LTE (Long Term Evolution). The terminal (communication adapter) 20 acquires the operation data or the like of the air conditioner 10 (specifically, the heat source side device 11 and the usage side device 12) from the heat source side device 11, and transmits the operation data or the like of the air conditioner 10 to the server 30.

### «Server»

The server 30 can transmit and receive data to and from the terminal (communication adapter) 20 via any network. The server 30 includes one or more computers. The server 30 can detect an abnormality of the terminal 20 and transmit a restart instruction to the terminal 20.

The server 30 detects an abnormality of the terminal 20 from the state of transmission of data from the terminal 20. Hereinafter, the state of transmission of data from the terminal 20 will be described by dividing the state into [data not transmitted] and [data abnormality].

### [Data not transmitted]

For example, the state of data transmission from the terminal 20 is that no data is transmitted from the terminal 20 to the server 30. That is, when no data is transmitted from the terminal 20 to the server 30, it is determined that an abnormality has occurred in the terminal 20.

### [Data abnormality]

For example, the state of data transmission from the terminal 20 is that the data transmitted from the terminal 20 to the server 30 is abnormal. The data abnormality includes at least one of partial data loss (for example, part of the data that should exist does not exist), total data loss (for example, there are no files inside the compressed folder), data not being the most recent data (for example, the date is not the most recent date), and data inconsistency (for example, the current value is outside the upper and lower limits). That is, when there is an abnormality in the data transmitted from the terminal 20 to the server 30, it is determined that an abnormality has occurred in the terminal 20.

The server 30 transmits a restart instruction to the terminal 20. Hereinafter, the description will be divided into [when the user determines whether the terminal needs to be restarted] and [when the server determines whether the terminal needs to be restarted].

### [When the user determines whether the terminal needs to be restarted]

The server 30 receives an instruction to restart the terminal 20 from the user terminal 40. The server 30 transmits a restart instruction to the terminal 20 in response to the instruction from the user terminal 40. Thereafter, the terminal 20 restarts in response to the instruction from the server 30.

### [When the server determines whether the terminal needs to be restarted]

The server 30 determines whether the terminal 20 needs to be restarted. When the server 30 determines that the terminal 20 needs to be restarted, the server 30 transmits a restart instruction to the terminal 20. Thereafter, the terminal 20 restarts in response to the instruction from the server 30.

### <<<Detection of multiple abnormalities>>>

When the server 30 detects the abnormality of the terminal 20 multiple times, the server 30 may report, to the user terminal 40, the abnormality of the terminal 20. When the server 30 detects a plurality of abnormalities of the terminal 20, the server 30 may transmit a restart instruction to the terminal 20. The server 30 may report, to the user terminal 40, an abnormality of the terminal 20 or transmit a restart instruction to the terminal 20, based on the abnormality rate (for example, the number of times an abnormality was detected/(the number of times no abnormality was detected + the number of times an abnormality was detected)) of the terminal 20.

### <«Confirm the resolution of the abnormality>>>

The server 30 may determine whether the terminal 20 is normal after the terminal 20 is restarted. For example, the server 30 may determine that the terminal 20 is normal by having data transmitted from the terminal 20 to the server 30 or by finding no abnormality in the data transmitted from the terminal 20 to the server 30.

### <<User terminal»

The user terminal 40 may be, for example, a devices such as a smartphone, a tablet, a personal computer, or the like. The user terminal 40 receives, from the server 30, a report that an abnormality of the terminal (communication adapter) 20 has been detected.

### <Hardware configuration>

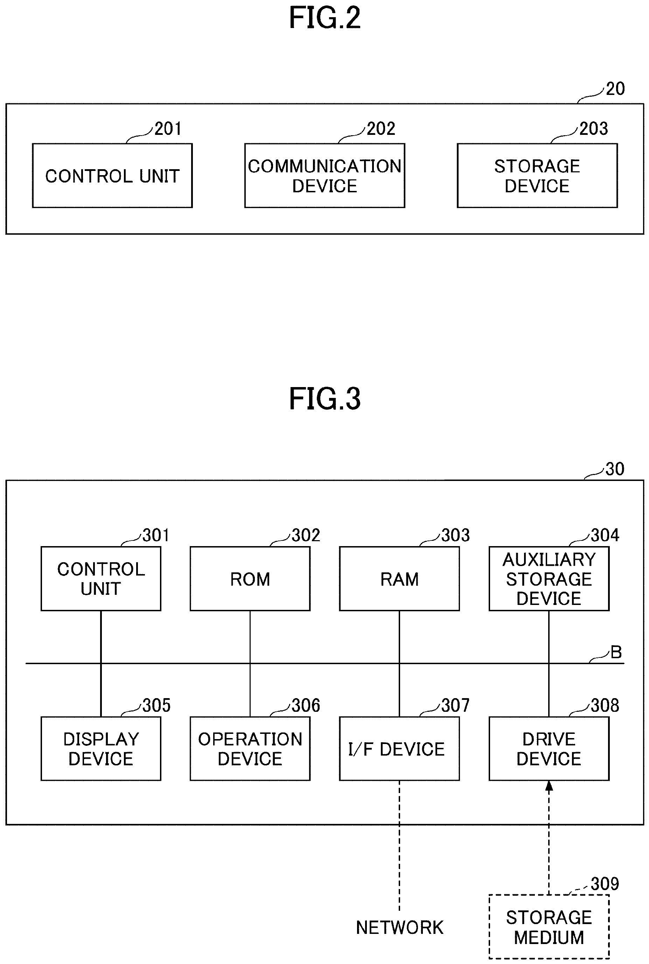

FIG. 2 is a diagram illustrating a hardware configuration of the terminal (communication adapter) 20 according to an embodiment of the present disclosure. The terminal (communication adapter) 20 includes a control unit 201, a communication device 202, and a storage device 203.

The control unit 201 is a processor such as a CPU (Central Processing Unit). Each of the processes described in the present specification is performed by the control unit 201 executing a program.

The communication device 202 is a transmitter and a receiver that communicates with a server 30 or the like via an arbitrary network (for example, wireless communications such as LTE).

The storage device 203 is a memory in which the control unit 201 stores data.

FIG. 3 is a diagram illustrating a hardware configuration of the server 30 according to an embodiment of the present disclosure. Note that the same applies to the user terminal 40. The server 30 includes a control unit 301, a ROM (Read Only Memory) 302, and a RAM (Random Access Memory) 303. The control unit 301, the ROM 302, and the RAM 303 form what is referred to as a computer.

The server 30 may also include an auxiliary storage device 304, a display device 305, an operation device 306, an I/F (interface) device 307, and a drive device 308. The hardware of the server 30 is connected to each other via a bus B.

The control unit (for example, CPU) 301 is a computing device that executes various programs installed in the auxiliary storage device 304. Each of the processes described in the present specification is performed by executing a program by the control unit 301.

The ROM 302 is a non-volatile memory. The ROM 302 functions as a main storage device for storing various programs, data, etc., necessary for the control unit 301 to execute various programs installed in the auxiliary storage device 304. Specifically, the ROM 302 functions as a main storage device for storing boot programs such as BIOS (Basic Input/Output System) and EFI (Extensible Firmware Interface).

The RAM 303 is a volatile memory such as DRAM (Dynamic Random Access Memory) and SRAM (Static Random Access Memory). The RAM 303 functions as a main storage device that provides a work area that is expanded when various programs installed in the auxiliary storage device 304 are executed by the control unit 301.

The auxiliary storage device 304 is an auxiliary storage device that stores various programs and information used when various programs are executed.

The display device 305 is a display device for displaying the internal state or the like of the server 30.

The operation device 306 is an input device for inputting various instructions to the server 30 by an operator of the server 30.

The I/F device 307 is a communication device for connecting to a network and communicating with other devices.

The drive device 308 is a device for setting a storage medium 309. The storage medium 309 includes a medium for recording information optically, electrically or magnetically, such as a CD-ROM, a flexible disk, a magneto-optical disk or the like. The storage medium 309 may include a semiconductor memory or the like for recording information electrically, such as a ROM, a flash memory or the like.

The various programs installed in the auxiliary storage device 304 are installed, for example, when a distributed storage medium 309 is set in the drive device 308 and the various programs recorded in the storage medium 309 are read out by the drive device 308. Alternatively, the various programs installed in the auxiliary storage device 304 may be installed by being downloaded from the network via the I/F device 307.

### <Processing method>

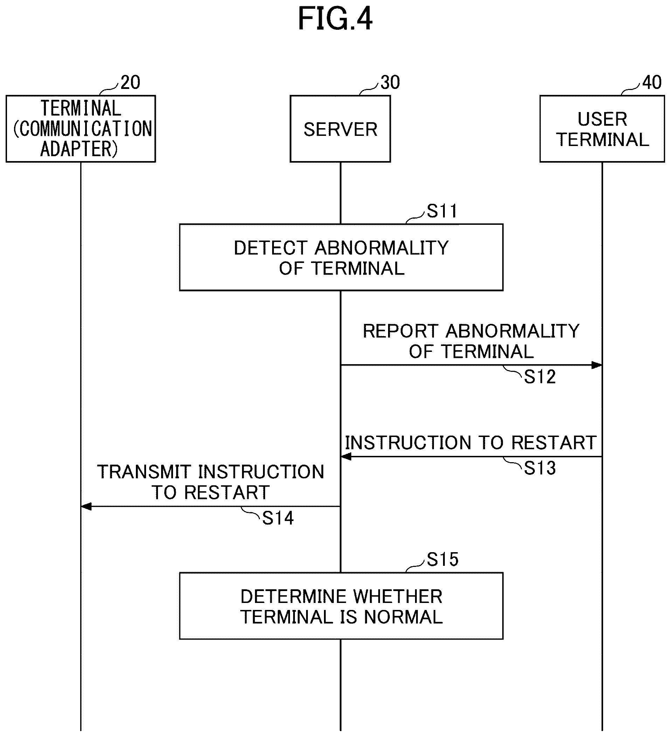

FIG. 4 is a sequence diagram of the processing executed by the air conditioning system 1 according to an embodiment of the present disclosure (when the user determines whether restart is necessary).

In step 11 (S11), the control unit 301 of the server 30 detects an abnormality of the terminal 20 from the state of data transmission from the terminal 20.

For example, the state of data transmission from the terminal 20 in S11 is that no data is transmitted from the terminal 20 to the server 30.

For example, the state of data transmission from the terminal 20 in S11 is that there is an abnormality in the data transmitted from the terminal 20 to the server 30. The abnormality in the data includes at least one of partial data loss, total data loss, data not being the most recent data, and data inconsistency.

In step 12 (S12), the control unit 301 of the server 30 reports, to the user terminal 40, the abnormality in the terminal 20 detected in S12. When the control unit 301 of the server 30 detects the abnormality in the terminal 20 multiple times, the control unit 301 may report, to the user terminal 40, the abnormality in the terminal 20.

In step 13 (S13), the control unit 301 of the server 30 receives an instruction to restart the terminal 20 from the user terminal 40.

In step 14 (S14), the control unit 301 of the server 30 transmits a restart instruction to the terminal 20 in response to the instruction from the user terminal 40 of S13. Thereafter, the terminal 20 restarts in response to the instruction from the server 30.

In step 15 (S15), the control unit 301 of the server 30 may determine whether the terminal 20 is normal after the terminal 20 restarts.

Thus, in one embodiment of the present disclosure, the user who operates the user terminal 40 can confirm the report that the abnormality of the terminal 20 has been detected and restart the terminal 20.

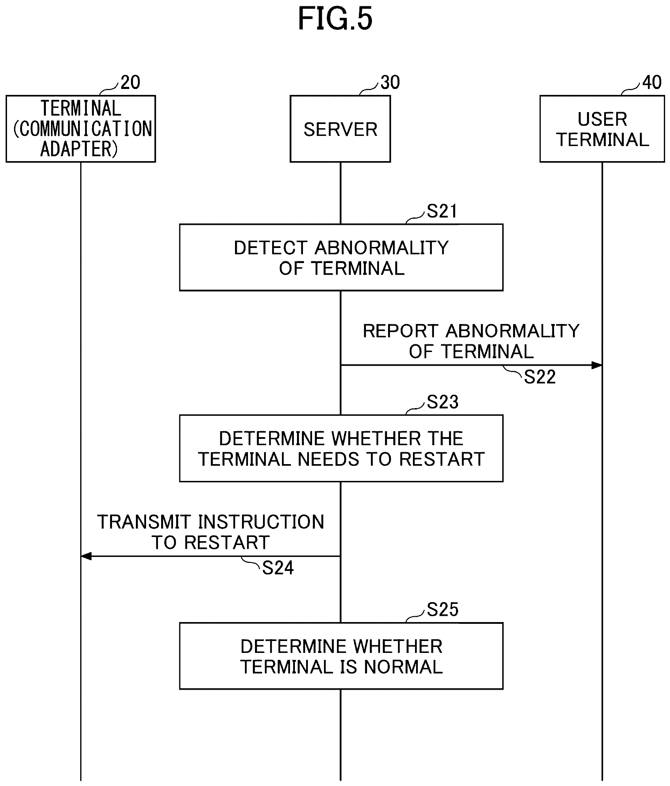

FIG. 5 is a sequence diagram of the processing executed by the air conditioning system 1 according to one embodiment of the present disclosure (when the server determines whether a restart is necessary).

In step 21 (S21), the control unit 301 of the server 30 detects an abnormality of the terminal 20 from the state of data transmission from the terminal 20.

For example, the state of data transmission from the terminal 20 in S21 is that no data is transmitted from the terminal 20 to the server 30.

For example, the state of data transmission from the terminal 20 in S21 is that there is an abnormality in the data transmitted from the terminal 20 to the server 30. The abnormality in the data includes at least one of partial data loss, total data loss, data not being the most recent data, and data inconsistency.

In step 22 (S22), the control unit 301 of the server 30 reports, to the user terminal 40, the abnormality in the terminal 20 detected in S22. When the control unit 301 of the server 30 detects the abnormality in the terminal 20 multiple times, the control unit 301 may report, to the user terminal 40, the abnormality in the terminal 20.

In step 23 (S23), the control unit 301 of the server 30 determines whether the terminal 20 needs to be restarted.

In step 24 (S24), when the control unit 301 of the server 30 determines in S23 that the terminal 20 needs to be restarted, the control unit 301 transmits a restart instruction to the terminal 20. Thereafter, the terminal 20 restarts in response to the instruction from the server 30.

In step 25 (S25), the control unit 301 of the server 30 may determine whether the terminal 20 is normal after the terminal 20 restarts.

Thus, in one embodiment of the present disclosure, when the server 30 detects an abnormality in the terminal 20, the server 30 may determine whether the terminal 20 needs to restart and cause the terminal 20 to restart.

Although the embodiments have been described above, it will be understood that various changes in form and details are possible without departing from the purpose and scope of the claims.

The present international application is based upon and claims priority to Japanese patent application no. 2021-114550 filed on July 9, 2021, the entire contents of which are incorporated herein by reference.

### Reference Signs List

1 air conditioning system
10 air conditioner
11 heat source side device
12 user side device
20 terminal (communication adapter)
30 server
40 user terminal
201 control unit
202 communication device
203 storage device
301 control unit
302 ROM
303 RAM
304 auxiliary storage device
305 display device
306 operation device
307 I/F device
308 drive device
309 storage medium

## Claims

1. A server comprising:
a control unit, wherein
the control unit is configured to
communicate with a terminal that collects information from a device, and detect an abnormality of the terminal based on a state of transmission of data from the terminal; and
transmit an instruction to restart to the terminal.

2. The server according to claim 1, wherein the control unit reports the abnormality of the terminal to a user terminal.

3. The server according to claim 2, wherein the control unit transmits the instruction to restart to the terminal, in response to an instruction from the user terminal.

4. The server according to claim 1, wherein
the control unit
determines whether the terminal needs to be restarted, and
transmits the instruction to restart to the terminal, in response to determining that the terminal needs to be restarted.

5. The server according to any one of claims 1 to 4, wherein the state of the transmission of the data from the terminal is that no data is transmitted from the terminal to the server.

6. The server according to any one of claims 1 to 4, wherein the state of the transmission of the data from the terminal is that there is an abnormality in the data transmitted from the terminal to the server.

7. The server according to claim 6, wherein the abnormality in the data includes at least one of partial data loss, total data loss, not being most recent data, and data inconsistency.

8. The server according to claim 2, wherein the control unit reports the abnormality of the terminal to the user terminal, when the abnormality of the terminal is detected multiple times.

9. The server according to any one of claims 1 to 8, wherein the control unit determines whether the terminal is normal after the terminal restarts.

10. A system comprising:
a server; and
a terminal connected to the server and configured to collect information from a device, wherein
the server includes a control unit configured to
detect an abnormality of the terminal based on a state of transmission of data from the terminal; and
transmit an instruction to restart to the terminal.

11. A method executed by a control unit of a server, the method comprising:
a step of detecting an abnormality of a terminal that collects information from a device, based on a state of transmission of data from the terminal; and
a step of transmitting an instruction to restart to the terminal.
